# EUROPEAN PATENT APPLICATION

(11) **EP 1 757 910 A1**
(43) Date of publication of application: **28.02.2007**
(21) Application number: 06017803.5
(22) Date of filing: 25.08.2006
(51) Int. Cl.: G01F 1/684, G01F 1/692, G01N 21/37

(54) **Infrared gas analyzer**

(30) Priority: 25.08.2005 JP 2005243647
(71) Applicant: Yokogawa Electric Corporation, Tokyo 180-8750 (JP)
(72) Inventor: Yamagishi, Hideaki, Musashino-shi Tokyo 180-8750 (JP); Matsuo, Junichi, Musashino-shi Tokyo 180-8750 (JP); Nanko, Tomoaki, Musashino-shi Tokyo 180-8750 (JP); Matsumura, Shigeru, Musashino-shi Tokyo 180-8750 (JP)
(74) Representative: Grünecker, Kinkeldey, Stockmair & Schwanhäusser Anwaltssozietät

(57) **Abstract**

An infrared gas analyzer includes a flow sensor placed in a gas flow channel in a state in which two heating resistors are kept with a given spacing. The infrared gas analyzer further includes a substrate having a flat plane placed in parallel with the gas flow direction of the gas flow channel and a hole made in the flat plane of the substrate. The gas flow channel is provided in parallel with one face of a detector. The two heating resistors placed with a predetermined spacing on the substrate across the hole orthogonally to the gas flow direction.

## Description

### TECHNICAL FIELD

The present disclosure relates to an infrared gas analyzer for measuring the gas concentration using infrared light and in particular to an infrared gas analyzer that can be easily assembled and can be reduced in cost.

### RELATED ART

Related art documents relevant to an infrared gas analyzer and a flow sensor used therewith are as follows:

[Non-patent document 1] General Specifications, "IR400 infrared gas analyzer," May 2002, first edition, p5, issued by Yokogawa Electric Corporation.
[Patent document 1] Japanese Patent Unexamined Publication No. 2002-131230
[Patent document 2] Japanese Patent Unexamined Publication No. 2002-081982

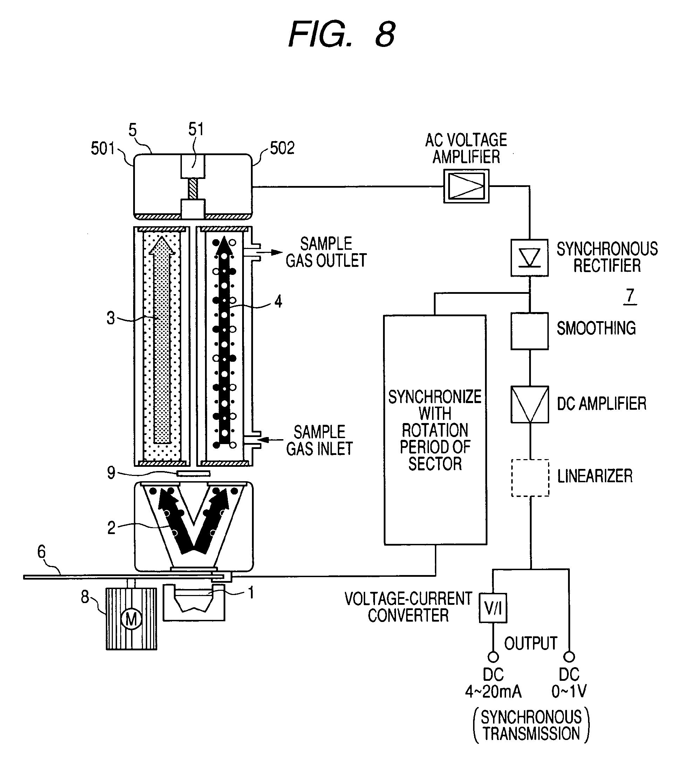

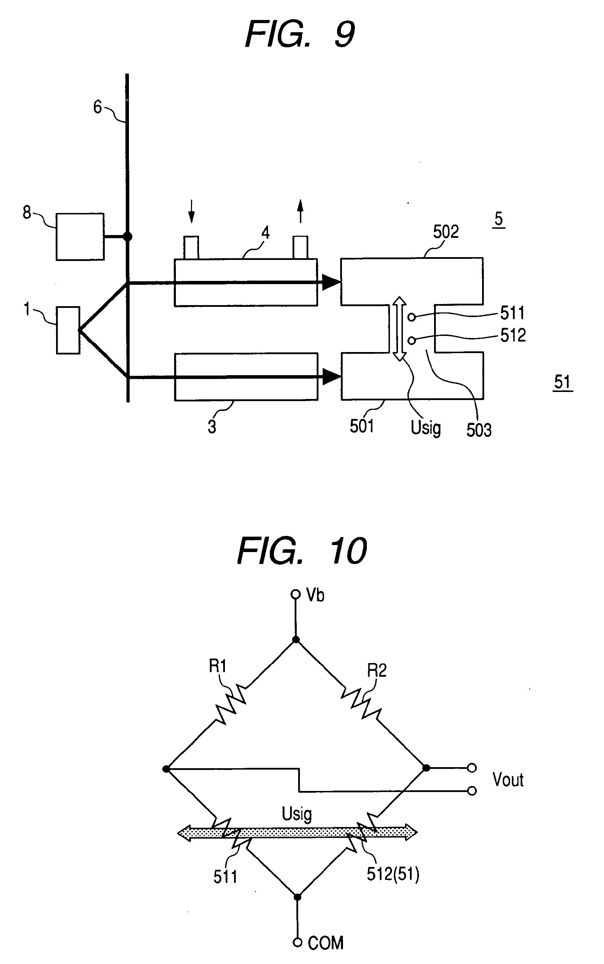

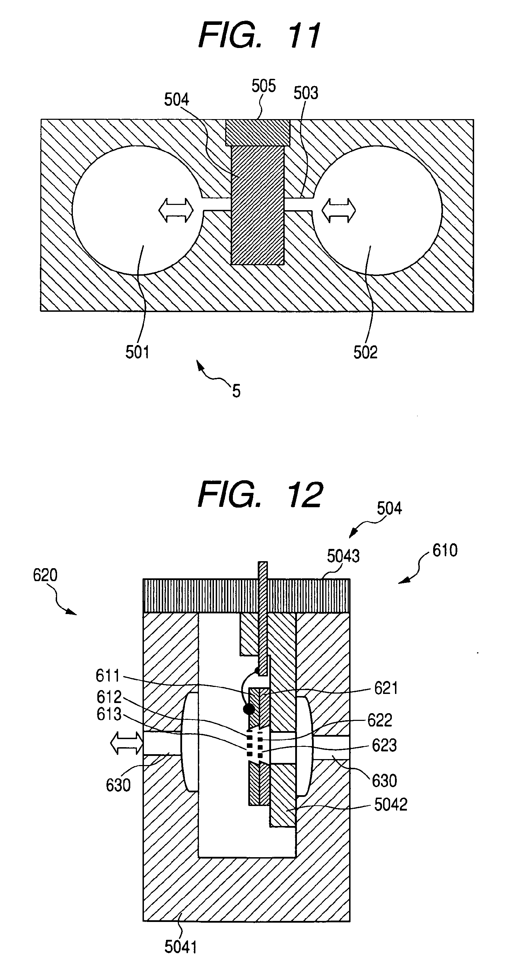

FIG. 8 is a schematic representation of the configuration of a related art example hitherto used generally. FIG. 9 is a concept schematic representation in FIG. 8. FIG. 10 is a schematic representation of a bridge circuit in FIG. 8. FIG. 11 is a schematic representation of the main part configuration in FIG. 8. FIG. 12 is a schematic representation of the main part configuration in FIG. 11.

In FIG. 8, infrared light emitted from an infrared light source 1 is divided into two by a distribution cell 2 and one is incident on a reference cell 3 and the other is incident on a sample cell 4.
Gas not containing any measurement target component, such as inert gas, is filled into the reference cell 3. Sample gas flows in the sample cell 4.
Thus, the infrared light separated into two by the distribution cell 2 is absorbed by the measurement target component only in the sample cell 4 and arrives at a detector 5.

The detector 5 is made up of a reference chamber 501 for receiving light from the reference cell 3 and a sample chamber 502 for receiving light from the sample cell 4, and a thermal flow sensor 51 for detecting comings and goings of gas is attached to a gas flow channel connecting the two chambers 501 and 502.

Gas containing the same component as the measurement target (detection gas) is filled into the detector 5 and when infrared light is incident on the detector 5 from the reference cell 3 and the sample cell 4, the measurement target component in the detection gas absorbs the infrared light and thus the detection gas thermally expands in the reference chamber 501 and the sample chamber 502.

Since the reference gas in the reference cell 3 does not contain the measurement target component, absorption of infrared light passing through the reference cell 3 by the measurement target component does not occur. If the sample gas in the sample cell 4 contains the measurement target component, a part of the infrared light is absorbed therein. Thus, in the detector 5, the infrared light incident on the sample chamber 502 decreases and thermal expansion of the detection gas in the reference chamber 501 becomes larger than thermal expansion of the detection gas in the sample chamber 502.

The infrared light repeats shutoff and irradiation by a rotation sector 6. When the infrared light is shut off, it is incident on neither the reference chamber 501 nor the sample chamber 502 and thus the detection gas does not expand.

Thus, a periodic differential pressure occurs between the reference chamber 501 and the sample chamber 502 in response to the measurement target component concentration in the sample gas, and the detection gas comes and goes in the gas flow channel provided between the chambers. The behavior of the detection gas is detected by the thermal flow sensor 51 and is subjected to AC voltage amplification by a signal processing circuit 7 and the result is output as a signal corresponding to the measurement target component concentration.
Numeral 8 denotes a synchronous motor for driving the rotation sector 6, and numeral 9 denotes a trimmer for adjusting the balance between infrared light incident on the reference cell 3 and infrared light incident on the sample cell 4.

Thus, if the measurement target component concentration in the sample gas changes, the light amount of the infrared light incident on the detector 5 (sample chamber 502) changes and therefore an output signal corresponding to the measurement target component concentration can be obtained through the signal processing circuit 7.

FIG. 9 is a concept schematic representation in FIG. 8.
In FIG. 9, assuming that an arrow Usig is a move direction of the detection gas occurring in the gas flow channel because of absorption of infrared light, a first heater wire 511 and a second heater wire 512 making up the thermal flow sensor 51 are arranged with a predetermined spacing along the move (flow) direction Usig (the arrow Usig) and generate temperature (resistance value) change responsive to a move of the detection gas.

That is, when the detection gas in the gas flow channel moves, the upstream heater wire is cooled by the detection gas and the downstream heater wire is heated by the heat of the upstream heater wire, so that a temperature difference occurs between the two heater wires.
The temperature change (resistance value change) in the two heater wires 511 and 512 is detected using a bridge circuit as in FIG. 10. In FIG.10, R1 and R2 denote comparison resistors.

FIG. 11 is a schematic representation of the main part configuration in FIG. 8 and is a schematic representation of the configuration to show an example of the detector in the related art.
FIG. 12 is a schematic representation of the main part configuration in FIG. 11 and is a schematic representation of the configuration to show an example of a flow sensor unit.
In FIG. 11, the reference chamber 501 and the sample chamber 502 which are hermetically sealed are provided on the left and the right of the figure.
The reference chamber 501 and the sample chamber 502 communicate with a flow sensor unit 504 embedded in the center of the figure through a gas flow channel 503.

The flow sensor unit 504 has a structure for detecting flow of the corresponding gas if there is a difference between the infrared light amounts incident on the reference chamber 501 and the sample chamber 502.
Numeral 505 denotes a cover for keeping hermeticity of the flow sensor unit 504 from the detector 5.

FIG. 12 is a detailed schematic representation of the flow sensor unit 504.
A chip base part 5042 is provided in a flow sensor unit body 5041.
In the chip base part 5042, two metal thin film heater parts 610 and 620 formed according to the same process of semiconductor technology are put on each other to form the flow sensor.

The metal thin film heater parts 610 and 620 are formed with heater wires 612 and 622 made of metal thin films on the surfaces of silicon substrate parts 611 and 621 and the silicon substrate positioned in the lower parts of the heater wires 612 and 622 is removed by anisotropic etching to form through holes 613 and 623 for gas flow.

Therefore, the two metal thin film heater parts 610 and 620 are put on each other, whereby the two heater wires 612 and 622 can be held with the spacing responsive to the thickness of the silicon substrate parts 611 and 621 and can be placed in a gas flow channel 630.
Numeral 5043 denotes a cover part for keeping the hermeticity of the gas flow channel 630 flowing through the metal thin film heater parts 610 and 620.

However, such an apparatus involves the following problems with respect to the assembly property and the seal property:
(1) A large number of seal faces to hold gas hermeticity exist and the structure is complicated.
(2) A chamber for housing the flow sensor unit 504 is placed between the reference chamber 501 and the sample chamber 502 and the gas flow channel 503 and the gas flow channel 630 need to be aligned so that they communicate with each other, and sealing needs to be provided so as to prevent gas leakage from the gas flow channel 503 and the gas flow channel 630, resulting in complicated assembling step (actually, bonding step).
(3) Thus, the number of assembly parts increases and an assembling step is required, thus causing a rise in cost.

### SUMMARY

Embodiments of the present invention provide an infrared gas analyzer that can be easily assembled and can be reduced in cost.

According to a first aspect of one or more embodiments of the invention, there is provided an infrared gas analyzer comprising:
a gas flow channel provided in parallel with one face of a detector;
a substrate having a flat plane placed in parallel with a gas flow direction of the gas flow channel and a hole made in the flat plane of the substrate; and
a flow sensor including two heating resistors placed with a predetermined spacing on the substrate across the hole orthogonally to the gas flow direction.

According to a second aspect of one or more embodiments of the invention, in the infrared gas analyzer of the first aspect, the gas flow channel includes a through channel formed in a gasket provided on one face of the detector.

According to a third aspect of one or more embodiments of the invention, in the infrared gas analyzer of the first aspect, the gas flow channel includes a recess part provided on one face of the detector.

According to a fourth aspect of one or more embodiments of the invention, in the infrared gas analyzer of the first aspect, the heating resistors are formed according to a semiconductor process.

According to a fifth aspect of one or more embodiments of the invention, in the infrared gas analyzer of the first aspect, the substrate is a semiconductor substrate with a recess part, and the recess part and the heating resistors are formed in the semiconductor substrate by etching.

According to a sixth aspect of one or more embodiments of the invention, in the infrared gas analyzer of the fifth aspect, the recess part is used as the gas flow channel.

According to a seventh aspect of one or more embodiments of the invention, in the infrared gas analyzer of the first aspect, the two heating resistors are paired and the flow sensor includes a plurality of heating resistors.

According to an eighth aspect of one or more embodiments of the invention, the infrared gas analyzer of the first aspect includes a wiring pattern for connecting the heating resistors provided on the substrate.
According to a ninth aspect of one or more embodiments of the invention, in the infrared gas analyzer of the first aspect, the heating resistors make up a bridge circuit.
According to a tenth aspect of one or more embodiments of the invention, in the infrared gas analyzer of the first aspect, the substrate is a silicone substrate and the hole is formed in the silicone substrate by anisotropic etching.

Various implementations may include one or more the following advantages. For example, the gas flow channel is provided in parallel with one face of the gas cell main body, so that the gas flow channel required for the detector of an infrared gas analyzer can be easily formed in a small number of steps and an infrared gas analyzer whose manufacturing cost can be reduced can be provided.

Further, the gas flow channel is implemented as a through channel formed in a gasket provided on one face of the detector, so that there can be provided an infrared gas analyzer wherein a gas flow channel of a complicated shape can be easily formed as the gasket is punched.

Further, the gas flow channel is implemented as a recess part provided on one face of the detector, so that one face of the detector may be dug and the gas flow channel can be easily formed and since the surrounding side of the gas flow channel is implemented as one face of the detector, seal becomes unnecessary and an inexpensive infrared gas analyzer can be provided.

Further, the heating resistors are formed according to a semiconductor process, so that an infrared gas analyzer having heating resistors with good dimension accuracy can be more easily provided by applying the semiconductor process.

Further, the heating resistors are implemented as a semiconductor substrate is formed with a recess part by etching, so that an infrared gas analyzer not requiring a cover part for covering the heating resistors can be provided.

Further, the recess part is used as the gas flow channel, so that there can be provided an infrared gas analyzer having the gas flow channel with good dimension accuracy formed according to the semiconductor process.

Further, the two heating resistors are paired and a plurality of heating resistors are provided, so that an infrared gas analyzer with the signal amount increased and the sensitivity improved can be provided.
In the invention, an infrared gas analyzer that can be implemented without increasing the number of manufacturing steps and without complicating the manufacturing process can be provided. On the other hand, in the related art example, if an attempt is made to implement a similar configuration, an art of laying up a large number of substrates while keeping hermeticity is required and it is difficult or impossible to implement a similar configuration.

Further, the wiring pattern for connecting the heating resistors provided on the substrate is formed according to the semiconductor process.
Therefore, hitherto, heating resistors have been wired by manual soldering; the soldering work has become enormous with an increase in the number of pairs. In the invention, there can be provided an infrared gas analyzer that can be formed stably in batch according to a wiring pattern forming technology often used in the semiconductor process.

Further, the heating resistors make up a bridge circuit, so that necessary bridge detection circuit is designed and formed on the wiring pattern, whereby there can be provided an infrared gas analyzer wherein bridge detection circuit can be implemented easily with a small number of steps.

Further, the hole of the substrate is formed in silicone substrate by anisotropic etching, so that the semiconductor process is applied, whereby a large number of flow sensor holes can be formed in batch and an infrared gas analyzer that can contribute to cost reduction can be provided.
Other features and advantages may be apparent from the following detailed description, the accompanying drawings and the claims.

### BRIEF DESCRIPTION OF THE DRAWINGS

In the accompanying drawings:

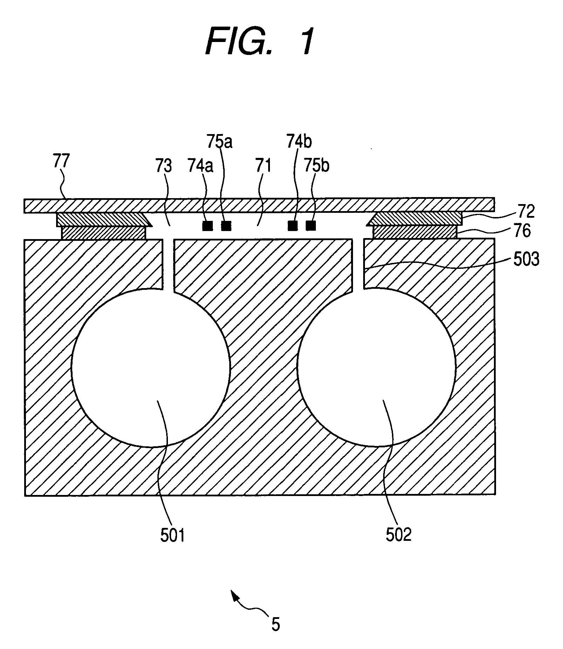

FIG. 1 is a schematic representation of the main part configuration of one embodiment of the invention;

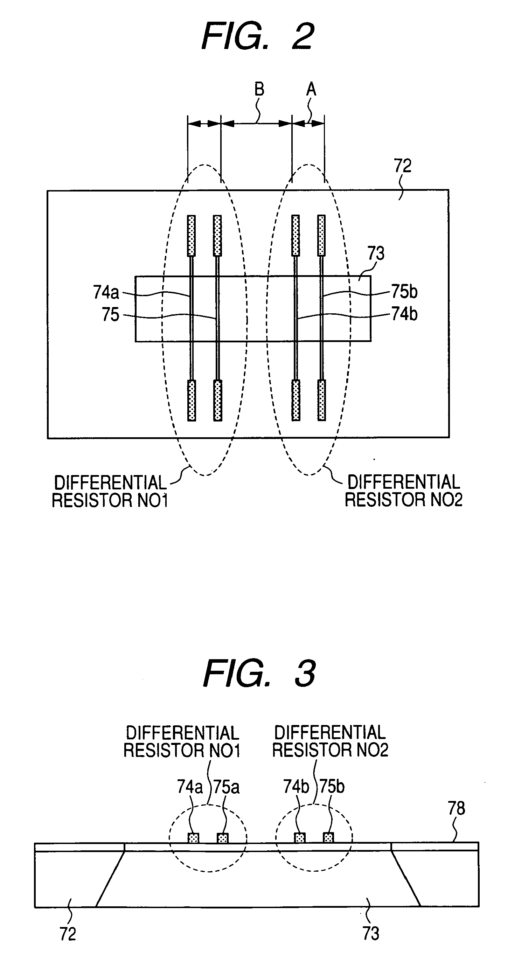

FIG. 2 is a detailed schematic representation of the main part in FIG. 1;
FIG. 3 is a side view in FIG. 2;

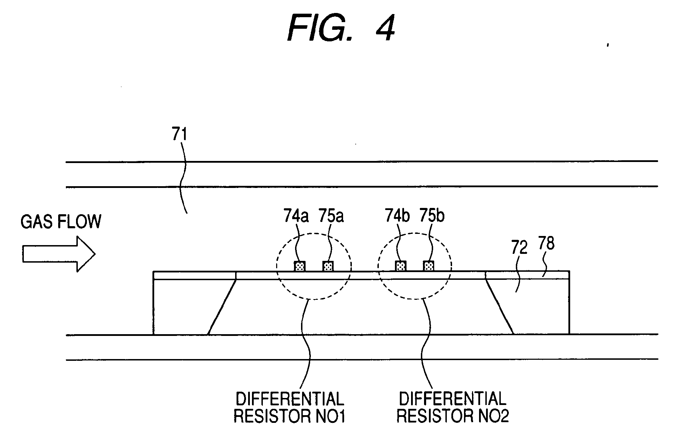

FIG. 4 is a drawing to show a use example in FIG. 2;

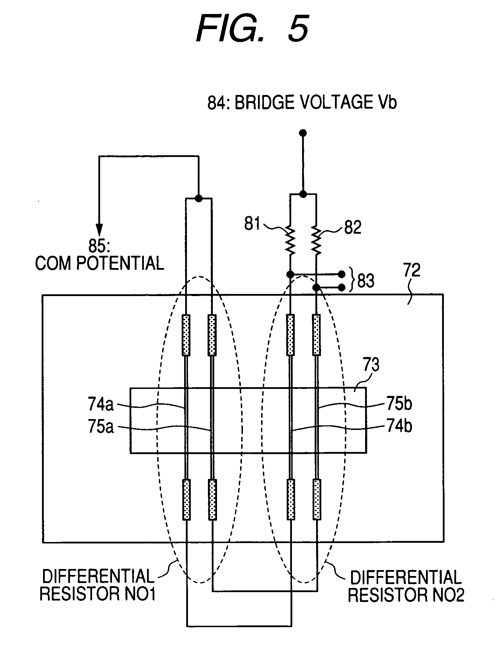

FIG. 5 is a schematic representation of the operation in FIG. 2;

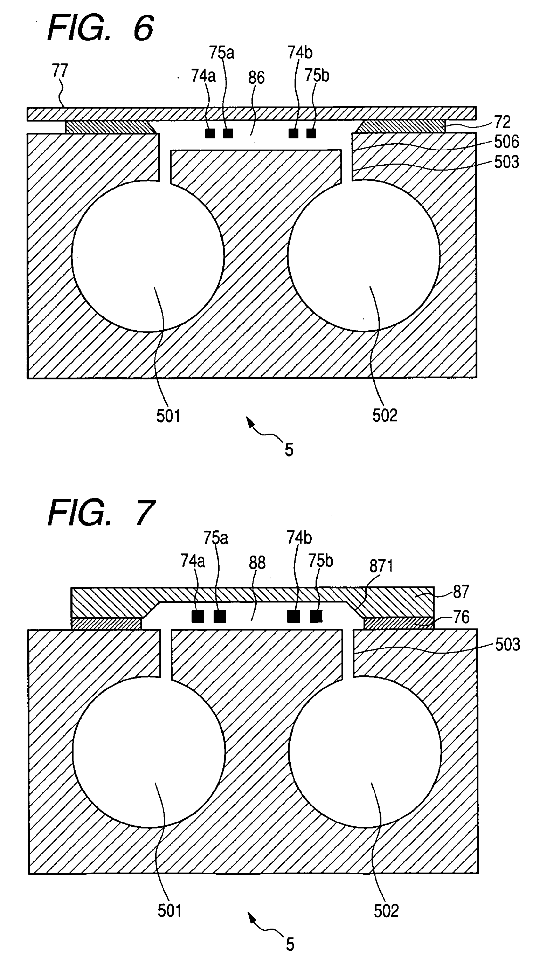

FIG. 6 is a schematic representation of the main part configuration of another embodiment of the invention;
FIG. 7 is a schematic representation of the main part configuration of another embodiment of the invention;
FIG. 8 is a schematic representation of the configuration of a related art example hitherto used generally;
FIG. 9 is a concept schematic representation in FIG. 8;
FIG. 10 is a schematic representation of a bridge circuit in FIG. 8;
FIG. 11 is a schematic representation of the main part configuration in FIG. 8, and
FIG. 12 is a schematic representation of the main part configuration in FIG. 11.

### DETAILED DESCRIPTION

The invention will be discussed in detail with the accompanying drawings.
FIG. 1 is a schematic representation of the main part configuration of one embodiment of the invention, and FIG. 2 is a detailed schematic representation of the main part in FIG. 1, wherein two pairs of heating resistors are used.
FIG. 3 is a side view in FIG. 2, FIG. 4 is a drawing to show a use example in FIG. 2, and FIG. 5 is a schematic representation of the operation in FIG. 2. Parts identical with those previously described with reference to FIGS. 8 and 11 are denoted by the same reference numerals in FIGS. 1 to 5.
Only the differences from the related art example in FIGS. 8 and 11 will be discussed below:
A gas flow channel 71 is provided in parallel with one face of a detector 5.
A substrate 72 has a flat plane placed in parallel with the gas flow direction of the gas flow channel 71.
A hole 73 is made in the flat plane of the substrate 72, as shown in FIG. 2.
Two heating resistors 74 and 75 are placed with a predetermined spacing on the substrate across the hole 73 orthogonally to the gas flow direction.

A seal part 76 is provided between one face of the detector 5 and the substrate 72 for sealing the side surroundings of the gas flow channel 71. In this case, a gasket is used.
A cover part 77 is placed covering the substrate 72 for sealing the top face of the gas flow channel 71.

In this case, two heating resistors 74 and 75 are paired and two pairs of heating resistors 74a and 75a and 74b and 75b are provided.
In this case, the heating resistors 74a, 75a, 74b, and 75b are formed according to a semiconductor process.

The substrate 72 is formed with a wiring pattern (not shown) for electrically connecting the heating resistors 74a, 75a, 74b, and 75b according to a semiconductor process.
The heating resistors 74a, 75a, 74b, and 75b make up a bridge circuit as shown in FIG. 5.

In this case, the hole 73 of the substrate 72 is formed in silicon substrate 72 by anisotropic etching.
In this case, an insulating layer is provided between the silicon substrate 72 and the heating resistors 74 and 75.

A denotes the difference between the upstream heating resistor 74 and the downstream heating resistor 75, and B denotes the difference between the heating resistors.
In FIG. 5, numerals 81 and 82 denote comparison resistors, numeral 83 denotes a bridge output terminal, numeral 84 denotes bridge voltage Vb, and numeral 85 denotes COM potential.

In short, in the embodiment, an infrared gas sensor is formed on one silicon substrate 72. The etching hole 73 worked according to a technique such as anisotropic etching is formed in a part of the silicon substrate 72.

The insulating layer 78 is formed on the surface of the silicon substrate 72 as an electric separation layer, and the resistors 74a, 75a, 74b, and 75b are patterned on the insulating layer 78. Parts of the resistors 74a, 75a, 74b, and 75b are bridged over the space portion of the etching hole 73 and float with no supporting part. The float portions are heated and function as a flow quantity detection section.

In short,
(1) The gas flow channel 71 is provided on one face of the detector 5.
(2) A semiconductor patterning process is applied as the forming method of the resistors 74a, 75a, 74b, and 75b so that upstream heater wire 612 and downstream heater wire 611 separately formed and piled on each other in the related art example used generally are formed on the same substrate 72 face.

(3) The heating resistors 74a and 74b positioned in the gas upstream flow and the heating resistors 75a and 75b placed downstream just from the upstream heating resistors 74a and 74b are formed on the substrate 72 in pairs. Hereinafter, the paired heating resistors will be referred to as "differential resistors." The distance between the upstream and downstream heating resistors 74a, 75a, 74b, 75b largely affects the flow velocity sensitivity and the measurement range. The parameter is determined from the characteristic of a gas cell.

(4) At least one or more pairs of "differential resistors" are formed on the same substrate 72 and are connected.
To lay out a plurality of "differential resistors," a method of forming the resistors in row in the gas flow direction is available as a representative example.

(5) FIG. 5 shows an example of a bridge detection circuit for measuring the gas linear velocity. In this example, in paired differential resistors 74 and 75, the upstream differential resistors 74a and 74b are connected and the downstream differential resistors 75a and 75b are connected, forming a half bridge circuit as a whole.

In the described configuration, a reference chamber 501 and a sample chamber 502 are communicated through a gas flow channel 503 and the gas flow channel 71, and gas flow is detected by the heating resistors 74 and 75.

Consequently, the gas flow channel 71 for detecting a flow of gas generated from the reference chamber 501 and the sample chamber 502 is provided on one face of the detector 5 where the reference chamber 501 and the sample chamber 502 are provided and an array flow sensor is provided in parallel with the surface portion, whereby the gas flow channel 71 required for the gas cell of an infrared gas analyzer can be easily formed in a small number of steps and an inexpensive infrared gas analyzer can be provided.

An infrared gas analyzer with widened flexibility of selection of assembling can be provided in such a manner that the gas flow channel 71 is sealed not only with an adhesive, but also by fastening with screws with a seal member (gasket, O ring, etc.,) between to assemble faces.

Since the gas flow channel 71 is implemented as a through channel formed by punching the gasket 76 provided on one face of the detector, so that there can be provided an infrared gas analyzer wherein a gas flow channel of a complicated shape can be easily formed by punching the gasket 76.

Since the heating resistors 74a, 75a, 74b, and 75b are formed according to the semiconductor process, an infrared gas analyzer having heating resistors with good dimension accuracy can be more easily provided by applying the semiconductor process.

Since the heating resistors 74a, 75a, 74b, and 75b are provided in pairs, an infrared gas analyzer with the signal amount increased and the sensitivity improved can be provided.
In the invention, an infrared gas analyzer that can be implemented without increasing the number of manufacturing steps and without complicating the manufacturing process can be provided. On the other hand, in the related art example, if an attempt is made to implement a similar configuration, an art of laying up a large number of substrates while keeping hermeticity is required and it is difficult or impossible to implement a similar configuration.

The wiring pattern for connecting the heating resistors 74a, 75a, 74b, and 75b provided on the substrate 72 is formed according to the semiconductor process.
Therefore, hitherto, heating resistors have been wired by manual soldering in the related art; the soldering work has become enormous with an increase in the number of pairs. In the invention, there can be provided an infrared gas analyzer that can be formed stably in batch according to a wiring pattern forming technology often used in the semiconductor process.

Since the heating resistors 74a, 75a, 74b, and 75b make up the bridge circuit, necessary bridge detection circuit is designed and formed on the wiring pattern, whereby there can be provided an infrared gas analyzer wherein bridge detection circuit can be implemented easily with a small number of steps.

Since the hole 73 of the substrate is formed in the silicon substrate 72 by anisotropic etching, the semiconductor process is applied, whereby a large number of flow sensor holes can be formed in batch and an infrared gas analyzer that can contribute to cost reduction can be provided.

FIG. 6 is a schematic representation of the main part configuration of another embodiment of the invention.
In the embodiment, a gas flow channel 86 is implemented as a recess part 506 made in one face of a detector 5.

Consequently, the gas flow channel 86 is implemented as the recess part 506 made in one face of the detector 5, so that one face of the detector 5 may be dug and the gas flow channel can be easily formed and since the surrounding side of the gas flow channel 86 is implemented as one face of the detector 5, seal becomes unnecessary and an inexpensive infrared gas analyzer can be provided.

FIG. 7 is a schematic representation of the main part configuration of another embodiment of the invention.
In the embodiment, a semiconductor substrate 87 includes a recess part 871, and heating resistors 74a, 75a, 74b, and 75b and the recess part 871 are formed in the semiconductor substrate 87 by etching.
The recess part 871 is used as a gas flow channel 88.

Consequently, the recess part 871 is used as the gas flow channel, so that there can be provided an infrared gas analyzer having the gas flow channel 88 with good dimension accuracy formed according to the semiconductor process.

In FIG. 5, connecting the heating resistors 74a, 75a, 74b, and 75b is described with the drawing as they are connected from the outside for convenience of the description, but they may be connected according to a wiring pattern on semiconductor and the connection work may be saved and simplified, of course.

The heating resistors 74a, 75a, 74b, and 75b used for the description of the invention are simplified for easy-to-understanding the invention and the heating resistors 74a, 75a, 74b, and 75b are those containing a multiple-folded shape (meandering shape), of course.

The specific preferred embodiment of the invention described above is only illustrative for the description of the invention.
Therefore, it is to be understood that the invention is not limited to the specific embodiments described above and that the invention contains various changes and modifications without departing from the spirit and the scope of the invention.

## Claims

1. An infrared gas analyzer comprising:
a gas flow channel provided in parallel with one face of a detector;
a substrate having a flat plane placed in parallel with a gas flow direction of said gas flow channel and a hole made in the flat plane of said substrate; and
a flow sensor including two heating resistors placed with a predetermined spacing on said substrate across said hole orthogonally to the gas flow direction.

2. The infrared gas analyzer as claimed in claim 1, wherein said gas flow channel includes a through channel formed in a gasket provided on one face of the detector.

3. The infrared gas analyzer as claimed in claim 1, wherein said gas flow channel includes a recess part provided on one face of the detector.

4. The infrared gas analyzer as claimed in claim 1, wherein said heating resistors are formed according to a semiconductor process.

5. The infrared gas analyzer as claimed in claim 1, wherein said substrate is a semiconductor substrate with a recess part, and the recess part and said heating resistors are formed in the semiconductor substrate by etching.

6. The infrared gas analyzer as claimed in claim 5, wherein the recess part is used as said gas flow channel.

7. The infrared gas analyzer as claimed in claim 1, wherein said two heating resistors are paired and the flow sensor includes a plurality of heating resistors.

8. The infrared gas analyzer as claimed in claim 1 comprising:
a wiring pattern for connecting said heating resistors provided on said substrate.

9. The infrared gas analyzer as claimed in claim 1, wherein said heating resistors make up a bridge circuit.

10. The infrared gas analyzer as claimed in claim 1, wherein said substrate is a silicone substrate and said hole is formed in the silicone substrate by anisotropic etching.
